# EUROPÄISCHE PATENTSCHRIFT

(11) **EP 2 258 545 B1**
(45) Veröffentlichungstag und Bekanntmachung des Hinweises auf die Patenterteilung: **22.02.2017**
(21) Anmeldenummer: 10005209.1
(22) Anmeldetag: 19.05.2010
(51) Int. Cl.: B32B 5/18, B32B 27/32, B65D 65/40

(54) **Leicht zu öffnende Verpackung**
Easily opened packaging
Emballage pouvant s'ouvrir facilement

(30) Priorität: 19.05.2009 DE 102009021987; 15.09.2009 DE 102009041341
(43) Veröffentlichungstag der Anmeldung: 08.12.2010
(73) Patentinhaber: Infiana Germany GmbH & Co. KG, 91301 Forchheim (DE)
(72) Erfinder: Stark, Kurt, Dr., 91284 Neuhaus (DE); Schuhmann, Michael, Dipl.-Ing., 90613 Großhabersdorf (DE)
(74) Vertreter: Kutzenberger, Helga

(56) Entgegenhaltungen:
- US-A- 4 781 294
- DATABASE WPI Week 200254 Thomson Scientific, London, GB; AN 2002-504677 XP002593414 -& JP 2002 154555 A (DAINIPPON PRINTING CO LTD) 28. Mai 2002 (2002-05-28)
- DATABASE WPI Week 198451 Thomson Scientific, London, GB; AN 1984-314781 XP002593415 -& JP 59 196239 A (CHISSO CORP) 7. November 1984 (1984-11-07)

## Beschreibung

Die vorliegende Erfindung betrifft eine leicht zu öffnende , nicht thermogeformte Gesamtverpackung aus einer Mehrschichtfolie umfassend (a') eine monoaxial gereckte, siegelfähige Schicht (a) basierend auf wenigstens einem geschäumten thermoplastischen Olefin-Homo-oder Copolymeren und (b') eine monoaxial in Längsrichtung gereckte Trägerschicht (b) basierend auf wenigstens einem thermoplastischen Polymeren und gegebenenfalls eine Barriereschicht (c), wobei die Schicht (a) in Längsrichtung in einem Reckverhältnis in einem Bereich von 1:3 bis 1:10 gereckt ist.

Bei vielen Verpackungsgütern wie Lebens- oder Nahrungsmitteln bereitet das Öffnen von Verpackungen Probleme. So lassen sich viele Verpackungen nur unkontrolliert öffnen, wodurch es zu einer Verschüttung des verpackten Guts und zur weiteren Unbrauchbarkeit der Verpackungen kommen kann. Dadurch wird eine weitere Aufbewahrung oder Lagerung des Verpackungsguts in solchen Verpackungen unmöglich. Aus dem Stand der Technik sind Verpackungen bekannt, die aus diesem Grund Öffnungshilfen wie Öffnungslaschen, Kerben oder Perforationen aufweisen.

Ferner werden in WO 2005/113370 Verpackungen aus einer kompakten (nicht verschäumten) Mehrschichtfolie beschrieben, die eine monoaxiale Orientierung aufweisen, wodurch das Öffnen der Verpackung erleichtert wird.

Aus WO 2007/141327 sind Verpackungen bekannt, die ein Prägungsmuster in Rillenform aufweisen, wodurch das Öffnen solche Verpackungen in Rillenrichtung erleichtert ist.

Nachteilig bei diesen bekannten Verpackungen ist, dass sie beim Öffnen noch immer eine zu hohe Ein- und Weiterreißfestigkeit, d.h. ein zu schlechtes Ein - und Weiterreißverhalten aufweisen, um ein kontrolliertes Öffnen der Verpackungen zu ermöglichen.

Es besteht jedoch ein Bedarf an Kunststoffverpackungen, die sich durch ein leichtes und kontrolliertes Öffnungsverhalten auszeichnen.

Aufgabe der vorliegenden Erfindung war es daher, Kunststoffverpackungen zur Verfügung zu stellen, die sich durch ein verbessertes und besser kontrollierbares Öffnen gegenüber den bekannten Verpackungen auszeichnen.

Diese Aufgabe wird durch die Bereitstellung der erfindungsgemäßen, leicht zu öffnenden, nicht thermoformbaren Gesamtverpackung aus einer Mehrschichtfolie umfassend
(a) eine wenigstens monoaxial gereckte, siegelfähige Schicht (a) basierend auf wenigstens einem geschäumten thermoplastischen Olefin-Homo-oder Copolymeren, wobei die Schicht (a) in Längsrichtung in einem Reckverhältnis in einem Bereich von 1:3 bis 1:10 gereckt ist,
(b) eine monoaxial in Längsrichtung gereckte Trägerschicht (b) basierend auf wenigstens einem thermoplastischen Polymeren, und
(c) gegebenenfalls einer Barriereschicht (c)
gelöst.

Unter dem Begriff "leicht zu öffnen" ist im Sinne der vorliegenden Erfindung zu verstehen, dass sich eine erfindungsgemäße Verpackung beim Öffnen durch eine sehr geringe Ein- und Weiterreißfestigkeit bzw. durch ein sehr gutes Ein- und Weiterreißverhalten auszeichnet. Die Prüfung der Ein- und Weiterreißfestigkeit beim Öffnen der erfindungsgemäßen Verpackung erfolgt nach DIN EN 53356 gemäß dem nachstehend beschriebenen Verfahren, wobei die Einreißkraft als Maß für die Einreißfestigkeit erfindungsgemäß vorzugsweise gleich oder kleiner 20 N, vorzugsweise gleich oder kleiner 17 N, beträgt.

Die Schicht (a) der erfindungsgemäß zum Einsatz kommenden Mehrschichtfolie basiert auf wenigstens einem geschäumten, thermoplastischen Olefin-Homo- oder Copolymer.

Vorzugsweise basiert die Schicht (a) auf geschäumten, thermoplastischen Olefin-Homo-oder Copolymeren von α,ß-ungesättigten Olefinen mit vorzugsweise 2-6 Kohlenstoffatomen. Bevorzugt basiert die Schicht (a) auf geschäumtem Polyethylen (PE), insbesondere LDPE oder HDPE, Polypropylen (PP), Polybutylen (PB), Polyisobutylen (PI) oder geschäumten Mischungen aus wenigstens zwei der genannten Polymeren.

Mit "LDPE" wird unverschäumtes Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird unverschäumtes Polyethylen hoher Dichte bezeichnet, welches nur eine geringe Verzweigung der Molekülkette aufweist, wobei die Dichte im Bereich zwischen 0,94 und 0,97 g/cm³ liegt.

Bevorzugt basiert die Schicht (a) auf wenigstens einem verschäumten Polyethylen und verschäumtem Polypropylen, ganz besonders bevorzugt eignet sich wenigstens ein verschäumtes Polypropylen.

Vorzugsweise weist die Schicht (a) eine geschlossenzellige, offenzellige oder gemischtzellige Schaumstruktur auf, wobei eine geschlossenzellig geschäumte Olefin-Homo-oder Copolymer-Schicht bevorzugt ist. Unter gemischtzelliig geschäumt wird ein Schaum mit einer offenzelligen und geschlossenzelligen Struktur verstanden.

Vorzugsweise weist die verschäumte Schicht (a) eine Dichte von 0,3 bis 0,8 g/cm³, vorzugsweise von 0,4 bis 0,6 g/cm³ auf.

In einer bevorzugten Ausführungsform beträgt die Schichtdicke der gereckten Schicht (a) wenigstens 30%, vorzugsweise wenigstens 60%, besonders bevorzugt wenigstens 75% der Gesamtschichtdicke der zum Einsatz kommenden Mehrschichtfolie.

Die Schichtdicke der gereckten Schicht (a) der erfindungsgemäß zum Einsatz kommenden Mehrschichtfolie beträgt vorzugsweise von 10 bis 250 µm, besonders bevorzugt von 30 bis 120 µm, ganz besonders bevorzugt von 40 bis 100 µm, insbesondere bevorzugt von 50 bis 80 µm.

Die Schicht (a) der erfindungsgemäß zum Einsatz kommenden Mehrschichtfolie ist eine Oberflächenschicht der Mehrschichtfolie.

Mit Hilfe der Schicht (a) der erfindungsgemäß zum Einsatz kommenden Mehrschichtfolie kann die erfindungsgemäße Verpackung versiegelt werden, d.h. die Schicht (a) ist siegelfähig, besonders bevorzugt heißsiegelfähig.

Vorzugsweise basiert die Schicht (a) auf einer verschäumten Mischung von Olefin-Homo-und Copoylmeren, besonders bevorzugt auf einer verschäumten Mischung aus einem Olefin-Homopolymeren und dessen Copolymeren mit wenigstens einem weiteren α, β - ungesättigten Olefin, wie z. B. einer verschäumten Mischung aus Polypropylen und einem Copolymeren aus Propylen und wenigstens einem weiteren α, β ungesättigten Olefin, besonders bevorzugt eine verschäumte Mischung aus Polypropylen und einem Propylen/Ethylen Copolymeren oder Propylen/Butylen Copolymeren, das vorzugsweise durch eine metallocen Copolymerisation hergestellt wurde.

Es ist auch möglich, die erfindungsgemäße Mehrschichtfolie siegelfähig auszurüsten, indem die verschäumte Schicht (a) mit einer Siegelschicht (a'), vorzugsweise einer heißsiegelfähigen Sicht, auf einer ihrer Oberflächen ausgerüstet wird. Als Siegelschichtmaterialien eignen sich dafür die vorstehend genannten Polymeren, die als siegelfähige Mischungskomponente bei der Herstellung einer siegelfähigen verschäumten Schicht (a) mitverwendet werden können. Darüber hinaus kann als Siegelschichtmaterial ein Olefin-Homo-oder Copolymeres eingesetzt werden, dass einen niedrigeren, vorzugsweise um wenigstens 10 °C tieferen Schmelzpunkt als das verschäumte Polymermaterial der Schicht (a) hat. Vorzugsweise eignen sich als Siegelschichtmaterialien LDPE, m-PE, HDPE, Propylen/Ethylen-Copolymere, Ethylen/Vinylacetat-Copolymere, lonomere wie Ethylen/Methacrylsäure-Copolymere ggf. zumindest teilweise als Salz, vorzugsweise Natrium- oder Zinksalz, Propylen/Ethylen/Butylen Terpolymere, Ethylen/Butylen Copolymere oder Polybutylen sowie Mischungen aus wenigstens 2 der genannten Polymeren. Vorzugsweise beträgt die Schichtdicke einer ggf. vorhandenen Siegelschicht 5 - 30 µm.

Die Schicht (a) der erfindungsgemäß zum Einsatz kommenden Mehrschichtfolie ist monoaxial in Maschinenrichtung, d. h. in Längsrichtung im Bereich von 1:3 bis 1:5 gereckt. ,

Zur Herstellung der Trägerschicht (b) der erfindungsgemäß zum Einsatz kommenden Mehrschichtfolie eignet sich wenigstens ein thermoplastisches Polymeres.

Vorzugsweise geeignet als thermoplastisches Polymeres ist ein Polymeres ausgewählt aus der Gruppe umfassend Polyolefine, Polyamide, Polyester, Copolymere aus wenigstens zwei Monomeren der genannten Polymeren und Mischungen aus den genannten Polymeren.

Die Trägerschicht (b) der erfindungsgemäß zum Einsatz kommenden Mehrschichtfolie basiert vorzugsweise auf Polyolefinen aus α,ß-ungesättigten Olefinen mit vorzugsweise 2-6 Kohlenstoffatomen, besonders bevorzugt auf wenigstens einem Polyethylen (PE), wie LDPE oder HDPE, Polypropylen (PP), Polybutylen (PB), Polyisobutylen (PI) oder wenigstens einem entsprechenden Co-Polymeren.

Die Trägerschicht (b) der erfindungsgemäß zum Einsatz kommenden Mehrschichtfolie kann auch auf einem Polyester basieren, wie z.B. einen thermoplastischen, aliphatischen, teilaromatischen oder aromatischen Polyester. Entsprechend können diese Polyester aus aliphatischen Polyolen wie z.B. Ethylenglycol oder 1,4-Butandiol und aliphatischen Dicarbonsäuren wie Adipinsäure, aromatischen Dicarbonsäuren wieTerephthalsäure oder Isophthalsäure aufgebaut sein.

Erfindungsgemäß können als Polyester vorzugsweise Polybutylenadipat (PBA), Polyethylenterephthalat (PET), Polybutylenterephthalat (PBT) oder entsprechende Co-Polymere zum Einsatz kommen. Als Polyester werden auch Polycarbonate (PC) verstanden, die als Trägerschichtmaterialien verwendet werden können.

Die Trägerschicht (b) der erfindungsgemäß zum Einsatz kommenden Mehrschichtfolie kann auch auf einem Polyamid, vorzugsweise auf einem thermoplastischen aliphatischen, teilaromatischen oder aromatischen Polyamid basieren. Entsprechend können zur Herstellung solcher Polyamide Diamine wie aliphatische Diamine mit 2-10 Kohlenstoffatomen, insbesondere Hexamethylendiamin und/oder aromatische Diamine mit 6-10 Kohlenstoffatomen, insbesondere p-Phenylendiamin und als Dicarbonsäuren aliphatische oder aromatische Dicarbonsäuren mit 6-14 Kohlenstoffatomen wie z.B. Adipinsäure, Terephthalsäure oder Isoterephthalsäure eingesetzt werden. Weiterhin können die Polyamide aus Lactamen mit 4-10 Kohlenstoffatomen wie z.B. aus ε-Caprolactam hergestellt werden. Erfindungsgemäß zum Einsatz kommende Polyamide sind vorzugsweise PA 6, PA 12, PA 66, PA 61, PA 6T oder Mischungen aus wenigstens zwei der genannten Polyamide.

Bevorzugt basiert die Trägerschicht (b) der erfindungsgemäß zum Einsatz kommenden Mehrschichtfolie auf wenigstens einem Polyester, besonders bevorzugt auf einem der vorstehend genannten Polyester. Die Trägerschicht (b) ist monoaxial in Maschinenrichtung gereckt.

Die gereckte Trägerschicht (b) der erfindungsgemäß zum Einsatz kommenden Mehrschichtfolie weist vorzugsweise eine Schichtdicke von 5 µm bis 100 µm, bevorzugt von 8 µm bis 80 µm, besonders bevorzugt von 10 µm bis 50 µm auf.

Die erfindungsgemäß zum Einsatz kommende Mehrschichtfolie kann gegebenenfalls eine Barriereschicht (c) aufweisen, die je nachdem welches Barriereschichtmaterial verwendet wurde, ggf. ebenfalls monoaxial, vorzugsweise in Maschinenrichtung längsgereckt sein kann.

Vorzugsweise ist diese Barriereschicht (c) eine Gasbarriereschicht, besonders bevorzugt eine Sauerstoffbarriereschicht und/oder eine Wasserdampfbarriereschicht.

Die Barriereschicht (c) der erfindungsgemäß zum Einsatz kommenden Mehrschichtfolie basiert vorzugsweise auf wenigstens einem Ethylen-Vinylalkohol-Copolymeren, wenigstens einem Polyvinylalkohol, wenigstens einem Metall, vorzugsweise Aluminium, oder wenigstens einem Metalloxid, vorzugsweise Aluminiumoxid oder SiOx, wobei das Metall oder das Oxid als aufgedampfte Schicht vorliegen kann.

Die Barriereschicht (c) basiert vorzugsweise auf einem Ethylen-Vinylalkohol-Copolymeren (EVOH), das durch im Wesentlichen vollständige Hydrolyse von entsprechenden ethylenhaltigen Vinylacetat-Copolymeren (EVAc) erhalten wird. Diese vollverseiften ethylenhaltige Polyvinylacetate weisen einen Verseifungsgrad ≥ 98 % und einem Ethylen-Anteil von 0,01-80 mol-%, vorzugsweise von 1-50 mol-% auf.

Die Barriereschicht (c) kann auch auf einem Polyvinylalkohol (PVOH) basieren, der durch eine im wesentlichen vollständigen Hydrolyse von Polyvinylacetaten (PVA) gewonnen wurde und als vollverseiftes Polyvinylacetat einen Verseifungsgrad ≥ 98 % aufweist.

Besonders bevorzugt basiert die Barriereschicht (c) auf einem Metall, ganz besonders bevorzugt auf Aluminium, das als aufgedampfte Schicht vorliegt.

Die gereckte oder ungereckte Barriereschicht (c) der erfindungsgemäß zum Einsatz kommenden Mehrschichtfolie weist vorzugsweise eine Schichtdicke von 1 µm bis 100 µm, bevorzugt von 2 µm bis 80 µm, besonders bevorzugt von 3 µm bis 60 µm, ganz besonders bevorzugt von 4 µm bis 40 µm auf, wobei aber die Schichtdicke der aufgedampften Metalle oder Metalloxide im A-Bereich liegt.

In einer bevorzugten Ausführungsform basiert die Barriereschicht (c) auf wenigstens einem Metall, vorzugsweise auf Aluminium, oder einem Metalloxid, vorzugsweise Al₂O₃, oder SiOx, und liegt als aufgedampfte Schicht auf der Trägerschicht (b) vor oder ist als Metallfolie mit der Trägerschicht (b) mittels eines Kaschierklebstoffes verbunden.

Vorzugsweise ist die Barriereschicht (c) zwischen der Schicht (a) und der Trägerschicht (b) angeordnet und ggf. jeweils über eine Haftvermittlerschicht mit der Schicht (a) bzw. der Schicht (b) verbunden.

Als Haftvermittler können übliche Haftvermittler eingesetzt werden. Die einzelnen Schichten oder Teilschichtverbunde der erfindungsgemäß zum Einsatz kommenden Mehrschichtfolien können auch mit üblichen Kaschierklebstoffen, vorzugsweise 2 Komponenten Polyurethan-Klebstoffen verbunden werden.

Die Barriereschicht (c) der erfindungsgemäß zum Einsatz kommende Mehrschichtfolie kann ggf. ebenfalls wenigstens monoaxial, vorzugsweise in Maschinenrichtung gereckt sein, sofern sie auf wenigstens einem Ethylen-Vinylalkohol-Copolymeren und/oder wenigstens einem Polyvinylalkohol basiert.

Jede der Schichten der erfindungsgemäß zum Einsatz kommenden Mehrschichtfolie kann mit wenigstens einem der nachfolgend aufgeführten, üblichen bekannten Additive versehen sein:
Antioxidantien, Antiblockmittel, Antifogmittel, Lichtschutzmittel, UV-Absorber wie HALS, UV-Filter, Farbpigmente und/oder Farben, Prozess-Stabilisatoren bzw. Prozesshilfsmittel, Wärmestabilisatoren, Antistatika, Flammschutzmittel, Nukleirungsmittel/Kristallisationshilfen/Kristallkeimbildner, Gleitmittel, Optische Aufheller, Weichmacher/Flexibilisierungsmittel, Silane, Antimikrobielle Wirkstoffe, Netz- und Dispergiermittel, Füllstoffe

In einer bevorzugten Ausführungsform kann die erfindungsgemäß zum Einsatz kommende Mehrschichtfolie als jeweilige Einzelschichten, als Teilverbund oder als gesamte Mehrschichtfolie in Form einer Schlauchfolie produziert und verarbeitet werden, wobei zumindest die Schicht (a) und die Schicht (b) in Längsrichtung gereckt wird.

In einer anderen bevorzugten Ausführungsform kann die erfindungsgemäß zum Einsatz kommende Mehrschichtfolie teilweise oder insgesamt als eine Cast-Folie produziert und verarbeitet werden, wobei zumindest die Schicht (a) und die Schicht (b) in Längsrichtung (Maschinenrichtung) gereckt wird.

Dementsprechend kann die Herstellung der erfindungsgemäß zum Einsatz kommenden Mehrschichtfolie nach beliebigen Herstellungsverfahren wie z.B. durch Laminierung, Extrusion ggf. durch Co-Extrusion zumindest teilweise erfolgen.

Vorzugsweise wird die Schicht (a) zunächst als Einzelschicht produziert und dann vorzugsweise durch Laminieren mit der Trägerschicht (b) und/oder ggf. weiteren Schichten verbunden.

Die Herstellung der Schicht (a) erfolgt vorzugsweise durch kalandrieren. Nach dem Austritt aus dem Kalander erfolgt das Recken der Schicht (a) in Längsrichtung über Rollen, die mit unterschiedlicher Geschwindigkeit laufen. Die Rollen sind beheizt, um die Schicht (a) auf die für das Recken notwendige Temperatur zu erwärmen. Nach erfolgter Reckung wird die Schicht (a) abgekühlt und behält dabei ihre Orientierung. Das Reckverhältnis ist das Verhältnis von Ausgangslänge zu Endlänge der Schicht (a).

Wird eine Schicht (a) mit einer Länge von 1 m beispielsweise monoaxial zu einer Schicht (a) mit einer Länge von 3 m gereckt, so entspricht dies einem Reckverhältnis von 1:3. Gegebenenfalls kann die Schicht (a) auch als Bestandteil eines Teilverbundes gereckt werden, sofern die weiteren Schichten des Teilverbundes auch gereckt vorliegen sollen.

Die Verschäumung der zur Herstellung der Schicht (a) eingesetzten thermoplastischen Olefin-Homo-oder Copolymeren kann entweder durch chemische oder physikalische Treibmittel erfolgen.

Zur physikalischen Verschäumung wird Luft oder ein anderes, geeignetes Gas wie Kohlendioxid oder n-Pentan, vorzugsweise unter Druck in das geschmolzene, zu verschäumende Polymermaterial eingebracht und die Schmelze unter Druckverwendung, vorzugsweise durch Extrusion, ausgetragen und verfestigt.

Eine chemische Verschäumung kann durch Zugabe eines chemischen Treibmittels, vorzugsweise in Form eines Pulvers, Granulats oder Masterbatches, in das zu verschäumende, geschmolzene Polymere und ggf. nach anschließender Wärmezufuhr erreicht werden. Während einer Extrusion der Schmelze kann so z. B. das Treibmittel unter Abgabe eines flüchtigen Bestandteils gespalten werden und damit nach Austritt aus dem Extruder die Verschäumung bewirken.

Es können einzelne oder sämtliche Schichten der erfindungsgemäß zum Einsatz kommenden Mehrschichtfolie durch (Co)-Extrusion, vorzugsweise als Flachfilmextrudate (=Cast-filme) oder als ggf. mehrschichtige Schlauchfilme hergestellt werden. Vorzugsweise werden die zur Reckung vorgesehenen extrudierten Filme unmittelbar nach der Extrusion im notwendigen Ausmaß gereckt.

Werden einzelne Schichten der erfindungsgemäß zum Einsatz kommenden Mehrschichtfolie nach einem der vorstehenden Verfahren separat hergestellt, so kann zum weiteren Aufbau der Mehrschichtfolie eine Haftvermittlerschicht notwendig sein.

Diese kann z.B. als Schmelze oder als eine flüssige Zubereitung, zum Beispiel als Lösung oder Dispersion, nach üblichen Methoden wie Sprühen oder Gießen auf eine der zu verbindenden Schichten der erfindungsgemäß zum Einsatz kommenden Mehrschichtfolie, wie z.B. auf die Schicht (a), ggf. beidseitig, auf die Trägerschicht (b) oder auf die Barriereschicht (c) aufgebracht und mit einer der weiteren Schichten verbunden werden. Alternativ kann die Haftvermittlerschicht ggf. auch auf eine der Schichten, wie z.B. auf die Schicht (a), ggf. beidseitig, auf die Trägerschicht (b) und/oder auf die Barriereschicht (c) durch Extrusion aufgebracht und unmittelbar mit einer weiteren Schicht oder einem Schichtverbund verbunden werden.

Sowohl die Trägerschicht (b) als auch die Schicht (a), ggf. mit einer Siegelschicht (a') ausgerüstet, der erfindungsgemäß zum Einsatz kommenden Mehrschichtfolie können jeweils unabhängig voneinander auch mit der Barriereschicht (c) oder dem verbleibenden Schichtverbund über einen Klebstoff, vorzugsweise einem Kaschierklebstoff, besonders bevorzugt einem Polyurethanklebstoff verbunden werden. Basiert die Barriereschicht (c) der erfindungsgemäß zum Einsatz kommenden Mehrschichtfolie auf einem Metall, vorzugsweise auf Aluminium oder SiOx, so wird der Verbund aus der Barriereschicht (c) und der Trägerschicht (b) vorzugsweise durch Aufdampfen der Barriereschicht (c) auf die Trägerschicht (b) erreicht.

Die erfindungsgemäße Verpackung aus der vorstehend beschriebenen Mehrschichtfolie kann auch ein Beutel, vorzugsweise ein Standbeutel aus einem Mantel und einem Boden sein.

Zur Herstellung der erfindungsgemäßen Verpackungen in Form eines Beutels, vorzugsweise eines Standbeutels wird die vorstehend beschriebene Mehrschichtfolie als Schlauchfolie oder Flachfolie mittels einer überlappenden Siegelung (lap-seal-Verbindung) und/oder fin-seal-Versiegelung zu einem Standbeutelkörper (Mantel) geformt, in welchem bodenseitig ein Bodenteil eingesiegelt wird, das vorzugsweise ebenfalls aus der vorstehend beschriebenen Mehrschichtfolie hergestellt wird.

Dabei wird die Mehrschichtfolie vorzugsweise so verarbeitet, dass die Umlaufrichtung des Mantels der Längsreckung der Mehrschichtfolie entspricht. Kopfseitig wird die Beutelverpackung, vorzugsweise der Standbeutel, nach Befüllung mittels einer horizontalen Versiegelung (fin-seal-Versiegelung) parallel zum Beutelboden und damit parallel zur Längsreckung verschlossen.

Gemäß einer besonders bevorzugten Ausführungsform ist am Standbeutelkörper beispielsweise an einer Siegelnaht eine Einreißhilfe, insbesondere eine Kerbe oder eine richtungsdefinierte Schwächung vorgesehen, mittels derer ein Aufreißen des Standbeutels parallel zur Längsreckung der gereckten Mehrschichtfolie initiierbar ist.

Durch das Entfernen der kopfseitigen fin-seal-Versiegelung, durch die der Standbeutel im geschlossenen Zustand kopfseitig zusammengehalten wird, kann sich der Standbeutel wieder entsprechend seiner Standbeutelkörperform, vorzugsweise seiner runden, schlauchförmigen Standbeutelkörperform entfalten, sodass das Niveau des Beutelinhalts nunmehr durch Verbreiterung des Beutels etwas nach unten absinkt und ein Verschütten des Beutelinhaltes zusätzlich auch dadurch vermieden wird.

Mittel einer vorstehend beschriebenen Ein- bzw. Aufreißhilfe ist ein gezieltes Einreißen des Schlauchbeutels bzw. Standbeutels sichergestellt, wobei die in Richtung Schlauchbeutel bzw. Standbeutel weisende Einreißspitze bzw. Kerbe in die spätere Öffnungsnaht mündet bzw. zu der Öffnungsspaltung der längs gereckten Folie führt.

Prinzipiell ist jedoch eine derartige Einreißhilfe nicht zwingend notwendig, da die erfindungsgemäßen Verpackungen aufgrund des Einsatzes eines verbesserten Verpackungsmaterials eine deutlich geringere Einreißkraft zum Öffnen einer Beutelverpackung, vorzugsweise einer Standbeutelverpackung, gegenüber den vorbekannten Beutelverpackungen benötigt.

Alternativ können die erfindungsgemäßen Standbeutelverpackungen auch hergestellt werden, indem aus den vorstehend beschriebenen Mehrschichtfolien Folienzuschnitte für die jeweiligen Vorder- und Rückseiten eines Standbeutelkörpers (Mantel) zugeschnitten werden.

Die jeweiligen Außenkanten der Vorder- und Rückseiten der Mehrschichtfolien werden auf einer Breite von ca. 3 mm miteinander versiegelt, wobei darauf zu achten ist, dass die Folienzuschnitte so miteinander verbunden werden, dass im fertigen Standbeutel die Längsreckung der Mehrschichtfolie parallel (horizontal) zum Standboden angeordnet ist.

Der Boden des Standbeutels wird durch das Einsiegeln eines V-faltenförmigen Zuschnitts gefertigt. Kopfseitig wird der Standbeutel nach einem Befüllen beispielsweise mittels einer fin-seal-Versiegelung verschlossen. Des Weiteren kann an der seitlichen fin-seal-Versiegelung vorzugsweise eine Einreißhilfe in Form einer Kerbe angebracht werden, mittels derer ein Aufreißen des Standbeutels initiiert werden kann. Wenn der Standbeutel nun geöffnet werden soll, so wird ein seitliches Aufreißen des Standbeutels an der Kerbe initiiert, wobei durch die Längsreckung wenigstens der geschäumten Schicht (a) der Mehrschichtfolie ein richtungsdefiniertes Aufreißen parallel zum Standboden gewährleistet ist.

Aus den vorstehend beschriebenen Mehrschichtfolien können auch Einschlagverpackungen gemacht werden, bei denen der Verlauf wenigstens einer zum Verschluss der Verpackung angebrachten Siegelnaht parallel zur Längsreckung der zum Einschlag verwendeten gereckten Mehrschichtfolie angeordnet sein muss.

Die jeweiligen Herstellungsverfahren und entsprechende Produktionsparameter sind dem Fachmann allgemein bekannt.

Die erfindungsgemäßen Verpackungen können bedruckt und/oder farbig sein und/oder sind sterilisierbar.

Die erfindungsgemäße Verpackung eignet sich vorzugsweise als Verpackung für Nahrungsmittel, vorzugsweise für Tiernahrung oder Lebensmittel. Vorzugsweise liegt daher Tiernahrung oder ein Lebensmittel in der erfindungsgemäßen Verpackung verpackt vor.

Ein weiterer Gegenstand der vorliegenden Erfindung ist daher die Verwendung einer erfindungsgemäßen Verpackung als Tiernahrungsverpackung.

Ein weiterer Gegenstand der vorliegenden Erfindung ist daher die Verwendung einer erfindungsgemäßen Verpackung als Lebensmittelverpackung.

Erfindungsgemäße Einschlagverpackungen eignen sich vorzugsweise zum Verpacken von Süßwaren, besonders bevorzugt zum Verpacken von Schokoladeware wie Schokoladetafeln, oder Riegeln mit unterschiedlichem Geschmack.

Die erfindungsgemäße Verpackung zeichnet sich dadurch aus, dass sie leicht zu öffnen ist, vorzugsweise parallel zur Längsorientierung der vorstehend beschriebenen Mehrschichtfolie. Für das leichte Öffnen einer erfindungsgemäßen Verpackung ist es nicht notwendig, eine Kerbe oder eine Schwächung anzubringen. Wenn eine Kerbe oder Schwächung angebracht wird, so ist diese vorzugsweise parallel zur Längsorientierung der Mehrschichtfolie anzubringen und grenzt vorzugsweise an den Siegelnahtbereich.

### Bestimmung der Weiterreißfestigkeit bzw. der Einreißfestigkeit

Die Weiterreißfestigkeit bzw. die Einreißfestigkeit werden als Weiterreißkraft bzw. als Einreißkraft gemessen und in [N] angegeben.

Die Bestimmung der Weiterreißfestigkeit bzw. der Einreißfestigkeit der erfindungsgemäß zum Einsatz kommenden Mehrschichtfolie dient zur Beurteilung des Weiterreißverhaltens bzw. des Einreißverhaltens einer eingeschnittenen Probe der erfindungsgemäß zum Einsatz kommenden Mehrschichtfolie.

5 Proben der erfindungsgemäß zum Einsatz kommenden Mehrschichtfolie, deren Weiterreißfestigkeit bzw. der Einreißfestigkeit ermittelt werden soll und die eine Breite von 50 mm und eine Länge von 100 mm aufweisen, werden jeweils in der Mitte der Breitseite fadengerade und parallel zur Längsseite 50 mm eingeschnitten.

Die Bestimmung der Weiterreißfestigkeit bzw. der Einreißfestigkeit der 5 Proben wird bei Normalklima (DIN 50014-23/50-2) durchgeführt. Die durch den Einschnitt entstandenen Schenkel der einzelnen Proben werden so in die Einspannklemmen einer Zugprüfmaschine eingespannt, dass die Längskanten der Schenkel parallel zur Zugrichtung liegen und dass der Einschnitt parallel in der Mitte der Klemme liegt.

Hierbei eingesetzte Zugmaschinen sind Zugmaschinen der Klasse 1 nach DIN 51221 Teil 1, die nach dem Prinzip der konstanten Verformungsgeschwindigkeit arbeiten und die die auf die jeweiligen Proben wirkenden Zugkräfte zu jedem beliebigen Zeitpunkt schreibend registrieren.

Die Prüfungsgeschwindigkeit der Zugmaschinen zur Bestimmung der Weiterreißfestigkeit bzw. der Einreißfestigkeit beträgt (100 +/-10) mm/min und der lichte Abstand zwischen den Einspannklemmen beträgt 50 mm. Die Schenkel der einzelnen Proben werden dann bis zur vollständigen Teilung der Proben auseinandergezogen.

Für die Ermittlung der Ein- und Weiterreißkraft wird dabei ein Kraft-Weg-Diagramm aufgezeichnet. Die Weiterreißkraft wird aus dem aufgezeichneten Kraft-Weg-Diagramm, wie in DIN 53356 beschrieben, in [N] ausgewertet. Die Einreißkraft wird aus dem Maximalwert in [N] des ersten Viertels des Kraft-Weg-Diagramms ermittelt.

Die nachfolgenden Beispiele und Vergleichsbeispiele dienen der Erläuterung der Erfindung, sind jedoch nicht einschränkend auszulegen.

### I. Charakterisierung der Schichten

Alle nachfolgenden %-Angaben sind jeweils Gew.-%.
- Schicht 1:: monoaxial orientierte Schicht aus Polyethylenterephthalat (OPET) (100%), (Reckverhältnis in Längsrichtung 1:5)
- Schicht 2:: Schicht aus Aluminium (100%)
- Schicht 3:: Schicht aus Polypropylen (PP) (100%)
- Schicht 4:: Schicht aus Polypropylen (PP) (100%) mit Rillenprägung (gemäß WO 2007/141327)
- Schicht 5:: monoaxial gereckte Schicht aus Polypropylen (PP) (100%) (gemäß WO 2005/113370) (Reckverhältnis in Längsrichtung 1:5)
- Schicht 6:: monoaxial gereckte, verschäumte Schicht aus Polypropylen (PP) (100%) mit in Längsrichtung verschiedenen Reckverhältnissen

### II. Herstellung der erfindungsgemäß zum Einsatz kommenden Mehrschichtfolien sowie Vergleichsfolien

Die Mehrschichtfolien der Vergleichsbeispiele 1 bis 6 sowie der Beispiele 1 bis 4 bestehen jeweils aus 3 Schichten und weisen eine Gesamtschichtdicke von jeweils 87 µm auf. Die einzelnen Schichten der Mehrschichtfolien sind miteinander mittels eines Kaschierklebstoffes auf Polyurethanbasis verbunden und grenzen jeweils in der Reihenfolge unmittelbar aneinander an, in der sie nachstehend aufgeführt sind. Die getesteten Mehrschichtfolien weisen eine vergleichbare Verbundhaftung gemessen nach DIN 53539-79 auf.

### III. Vergleichsbeispiele

### III. 1 Vergleichsbeispiel 1 (V1):

| | *Schicht* | *Schichtdicke* |
|---|---|---|
| Schicht (a) | Schicht 3 | 67 µm |
| Barriereschicht (c) | Schicht 2 | 8 µm |
| Trägerschicht (b) | Schicht 1 | 12 µm |

### III.2 Vergleichsbeispiel 2 (V2) (gemäß WO 2007/141327)

| | *Schicht* | *Schichtdicke* |
|---|---|---|
| Schicht (a) | Schicht 4 | 67 µm |
| Barriereschicht (c) | Schicht 2 | 8 µm |
| Trägerschicht (b) | Schicht 1 | 12 µm |

### III.3 Vergleichsbeispiel 3 (V3) (gemäß WO 2005/113370)

| | *Schicht* | *Schichtdicke* |
|---|---|---|
| Schicht (a) | Schicht 5 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:5 auf.

### III.4 Vergleichsbeispiel 4 (V4)

| | *Schicht* | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:1 auf.

### III.5 Vergleichsbeispiel 5 (V5)

| | *Schicht* | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:2 auf.

### III.6 Vergleichsbeispiel 6 (V6)

Eine zerstörungsfreie Produktion einer Schicht (a) (67 µm), die in Längsrichtung bis zu einem Reckverhältnis von 1:11 gereckt werden soll, ist nicht möglich, da die Schicht vorher abreißt.

### IV. Beispiele

### IV.1 Beispiel 1 (B1)

| | *Schicht* | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:3 auf.

### IV.2 Beispiel 2 (B2)

| | *Schicht* | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:5 auf.

### IV.3 Beispiel 3 (B3)

| | *Schicht* | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:7 auf.

### IV.4 Beispiel 4 (B4)

| | Schicht | *Schichtdicke* |
|---|---|---|
| Schicht (a) | Schicht 6 | 67 µm |
| Barriereschicht (c) | Schicht 2 | 8 µm |
| Trägerschicht (b) | Schicht 1 | 12 µm |

Die Schicht (a) weist in Längsrichtung ein Reckverhältnis von 1:9 auf.

### V. Weiter- und Einreißverhalten beim Öffnen

Die Weiterreißfestigkeit (Weiterreißkraft) bzw. die Einreißfestigkeit (Einreißkraft) der Mehrschichtfolien der Vergleichsbeispiele **V1-V5** sowie der erfindungsgemäß zum Einsatz kommenden Mehrschichtfolie der Beispiele **B1-B4** wurden gemäß der vorstehend beschriebenen Methode bestimmt und sind in Tabelle 1 angegeben.

**Tabelle 1**

| | *Weiterreißkraft [N]* | *Einreißkraft [N]* | *Reckverhältnis der Schicht (a)* | *Verschäumung der Schicht (a)* |
|---|---|---|---|---|
| **V1** | 4,6 | 39,2 | - | nein |
| **V2** | 1,9 | 25,2 | - | nein |
| **V3** | 2,0 | 30,1 | 1:5 | nein |
| **V4** | 5,3 | 52,1 | 1:1 | ja |
| **V5** | 4,2 | 41,9 | 1:2 | ja |
| **V6*** | - | - | 1:11 | ja |
| **B1** | 2,2 | 19,1 | 1:3 | ja |
| **B2** | 1,7 | 15,6 | 1:5 | ja |
| **B3** | 1,7 | 15,4 | 1:7 | ja |
| **B4** | 1,6 | 15,1 | 1:9 | ja |

| | | | | |
|---|---|---|---|---|
| *keine zerstörungsfreie Produktion der Schicht (a) von **V6** mit einem Reckverhältnis von 1:11 in Längsrichtung möglich | | | | |

## Patentansprüche

1. Eine leicht zu öffnende, nicht thermogeformte Gesamtverpackung aus einer Mehrschichtfolie umfassend
(a) eine monoaxial gereckte, siegelfähige Schicht (a) basierend auf wenigstens einem verschäumten, thermoplastischen Olefin-Homo-oder Copolymeren und
(b) eine monoaxial in Längsrichtung gereckte Trägerschicht (b) basierend auf wenigstens einem thermoplastischen Polymeren und
(c) gegebenenfalls eine Barriereschicht,
wobei die Schicht (a) in Längsrichtung in einem Bereich von 1:3 bis 1:10 gereckt ist.

2. Eine Gesamtverpackung nach Anspruch 1, **dadurch gekennzeichnet, dass** das verschäumte Olefin-Homo-oder Copolymere wenigstens ein verschäumtes Polyethylen und/oder verschäumtes Polypropylen, vorzugsweise wenigstens ein verschäumtes Polypropylen ist.

3. Eine Gesamtverpackung nach Anspruch 1 oder 2, **dadurch gekennzeichnet, dass** das verschäumte Olefin-Homo-oder Copolymere wenigstens ein geschlossenzellig, offenzellig oder gemischtzellig verschäumtes, vorzugsweise ein geschlossenzellig verschäumtes Olefin-Homo-oder Copolymeres ist.

4. Eine Gesamtverpackung nach einem der Ansprüche 1-3, **dadurch gekennzeichnet, dass** die Schicht (a) eine Dichte von 0,3 bis 0,8 g/cm³ aufweist.

5. Eine Gesamtverpackung nach einem der Ansprüche 1-4, **dadurch gekennzeichnet, dass** die Schichtdicke der Schicht (a) wenigstens 40% der Gesamtschichtdicke der Mehrschichtfolie beträgt.

6. Eine Gesamtverpackung nach einem der Ansprüche 1-5, **dadurch gekennzeichnet, dass** die Trägerschicht (b) auf wenigstens einem thermoplastischen Polymeren ausgewählt aus der Gruppe umfassend Polyolefine, Polyamide, Polyester und Copolymere aus wenigstens zwei Monomeren der genannten Polymeren, vorzugsweise auf wenigstens einem Polyester basiert.

7. Eine Gesamtverpackung nach einem der Ansprüche 1-6, **dadurch gekennzeichnet, dass** die Schicht (c) eine Gasbarriereschicht, vorzugsweise eine Sauerstoffbarriereschicht und/oder eine Wasserdampfbarriereschicht ist.

8. Eine Gesamtverpackung nach einem der Ansprüche 1-7, **dadurch gekennzeichnet, dass** die Schicht (c) auf wenigstens einem Ethylen-Vinylalkohol-Copolymeren, SiOx, wenigstens einem Polyvinylalkohol, wenigstens einem Metalloxid oder wenigstens einem Metall basiert.

9. Eine Gesamtverpackung nach Anspruch 8, **dadurch gekennzeichnet, dass** die Schicht (c) auf Aluminium oder SiOx basiert und auf die Trägerschicht (b) aufgedampft oder mit der Trägerschicht (b) mittels eines Kaschierklebstoffes verbunden ist.

10. Eine Gesamtverpackung nach einem der Ansprüche 1-9, **dadurch gekennzeichnet, dass** die Schicht (c) zwischen der Schicht (a) und der Trägerschicht (b) angeordnet ist und ggf. jeweils über eine Haftvermittlerschicht mit der Schicht (a) bzw. der Schicht (c) verbunden ist.

11. Eine Gesamtverpackung nach einem der Ansprüche 1-10, **dadurch gekennzeichnet, dass** die Mehrschichtfolie in Form einer Schlauchfolie verarbeitet wurde.

12. Eine Gesamtverpackung nach einem der Ansprüche 1-11, **dadurch gekennzeichnet, dass** die Gesamtverpackung die Form eines Beutels, vorzugsweise eines Standbeutels hat, oder als Einschlagverpackung vorliegt.

13. Eine Gesamtverpackung nach einem der Ansprüche 1-12, **dadurch gekennzeichnet, dass** die Gesamtverpackung an die zu öffnende Verschlussordnung, vorzugsweise Versiegelungsnaht, angrenzend als Öffnungshilfe eine Kerbe oder eine Perforation mit Längsausrichtung parallel zur Längsreckung der Mehrschichtfolie aufweist.

14. Eine Gesamtverpackung nach einem der Ansprüche 1-13, **dadurch gekennzeichnet, dass** ein Nahrungsmittel, vorzugsweise eine Tiernahrung oder ein Lebensmittel, in der Verpackung verpackt ist, die ggf. sterilisiert ist.

15. Eine Verwendung der Gesamtverpackung nach einem der Ansprüche 1-13 zur Verpackung von Tiernahrung oder Lebensmittel.

## Claims

1. An easy-to-open, non-thermally formed packaging made of a multilayer film comprising
(a) a monoaxially orientated, sealable layer (a) based on at least one foamed, thermoplastic olefin homo- or copolymer and
(b) a monoaxially longitudinally orientated substrate layer (b) based on at least one thermoplastic polymer and
(c) optionally a barrier layer,
where the longitudinal orientation ratio of the layer (a) is in the range from 1:3 to 1:10.

2. A packaging as claimed in Claim 1, **characterized in that** the foamed olefin homo- or copolymer is at least one foamed polyethylene and/or foamed polypropylene, preferably at least one foamed polypropylene.

3. A packaging as claimed in Claim 1 or 2, **characterized in that** the foamed olefin homo- or copolymer is at least one foamed olefin homo- or copolymer having a closed cell- an open cell or mixed cell structure- preferably closed cell structure.

4. A packaging as claimed in anyone of Claims 1 to 3, **characterized in that** the density of the layer (a) is from 0.3 to 0.8 g/cm³.

5. A packaging as claimed in anyone of Claims 1 to 4, **characterized in that** the thickness of the layer (a) is at least 40% of the total layer thickness of the multilayer film.

6. A packaging as claimed in anyone of Claims 1 to 5, **characterized in that** the substrate layer (b) is based on at least one thermoplastic polymer selected from the group comprising polyolefins, polyamides, polyesters and copolymers of at least two monomers of the polymers mentioned, preferably on at least one polyester.

7. A packaging as claimed in anyone of Claims 1-6, **characterized in that** the layer (c) is a gas-barrier layer, preferably an oxygen-barrier layer and/or a water-vapour-barrier layer.

8. A packaging as claimed in anyone of Claims 1-7, **characterized in that** the layer (c) is based on at least one ethylene/vinyl alcohol copolymer, SiOₓ, at least one polyvinyl alcohol, at least one metal oxide or at least one metal.

9. A packaging as claimed in Claim 8, **characterized in that** the layer (c) is based on aluminium or on SiOₓ deposited as vapour onto the substrate layer (b) or bonded by means of a lamination adhesive to the substrate layer (b).

10. A packaging as claimed in anyone of Claims 1 to 9, **characterized in that** the layer (c) is arranged between the layer (a) and the substrate layer (b) and optionally is bonded by way of an adhesion-promoter layer to the layer (a) and, respectively, to the layer (c).

11. A packaging as claimed in anyone of Claims 1 to 10, **characterized in that** the multilayer film has been processed in the form of a tubular film.

12. A packaging as claimed in anyone of Claims 1 to 11, **characterized in that** the packaging has the form of a pouch, preferably a self-supporting pouch, or of a wrapper.

13. A packaging as claimed in anyone of Claims 1 to 12, **characterized in that** the packaging has as an opening aid adjacent to the closure system that is to be opened, preferably to the seal seam, a notch or a perforation with a longitudinal orientation parallel to the longitudinal orientation of the multilayer film.

14. A packaging as claimed in anyone of Claims 1 to 13, **characterized in that** a foodstuff, preferably food or drinks or animal feed, is packaged in the packaging, which optionally has been sterilised.

15. Use of the packaging as claimed in anyone of Claims 1-13 for packaging food or drinks or animal feed.

## Revendications

1. Emballage global facile à ouvrir, non thermoformé, en une feuille multicouche, comprenant
(a) une couche (a) scellable, étirée monoaxialement à base d'au moins un homopolymère ou copolymère oléfinique thermoplastique, moussé,
(b) une couche support (b) étirée monoaxialement dans le sens longitudinal, à base d'au moins un polymère thermoplastique et
(c) le cas échéant une couche formant une barrière,
la couche (a) étant étirée dans le sens longitudinal dans une plage de 1:3 à 1:10.

2. Emballage global selon la revendication 1, **caractérisé en ce que** l'homopolymère ou le copolymère oléfinique moussé est au moins un polyéthylène moussé et/ou un polypropylène moussé, de préférence au moins un polypropylène moussé.

3. Emballage global selon la revendication 1 ou 2, **caractérisé en ce que** l'homopolymère ou le copolymère oléfinique moussé est au moins un homopolymère ou copolymère oléfinique moussé à cellules fermées, à cellules ouvertes ou à cellules mixtes, de préférence à cellules fermées.

4. Emballage global selon l'une quelconque des revendications 1-3, **caractérisé en ce que** la couche (a) présente une densité de 0,3 à 0,8 g/cm³.

5. Emballage global selon l'une quelconque des revendications 1-4, **caractérisé en ce que** l'épaisseur de la couche (a) représente au moins 40% de l'épaisseur de couche totale de la feuille multicouche.

6. Emballage global selon l'une quelconque des revendications 1-5, **caractérisé en ce que** la couche support (b) est à base d'au moins un polymère thermoplastique, choisi dans le groupe comprenant les polyoléfines, les polyamides, les polyesters et les copolymères d'au moins deux monomères des polymères mentionnés, de préférence à base d'au moins un polyester.

7. Emballage global selon l'une quelconque des revendications 1-6, **caractérisé en ce que** la couche (c) est une couche formant une barrière, de préférence une couche formant une barrière à l'oxygène et/ou une couche formant une barrière à la vapeur d'eau.

8. Emballage global selon l'une quelconque des revendications 1-7, **caractérisé en ce que** la couche (c) est à base d'au moins un copolymère d'éthylène-alcool vinylique, de SiOₓ, d'au moins un poly(alcool vinylique), d'au moins un oxyde métallique ou d'au moins un métal.

9. Emballage global selon la revendication 8, **caractérisé en ce que** la couche (c) est à base d'aluminium ou de SiOₓ et est déposée par évaporation sur la couche support (b) ou assemblée au moyen d'un adhésif de contrecollage avec la couche support (b).

10. Emballage global selon l'une quelconque des revendications 1-9, **caractérisé en ce que** la couche (c) est disposée entre la couche (a) et la couche support (b) et le cas échéant à chaque fois assemblée via une couche de promoteur d'adhérence avec la couche (a) ou avec la couche (c).

11. Emballage global selon l'une quelconque des revendications 1-10, **caractérisé en ce que** la feuille multicouche est transformée sous forme d'une feuille tubulaire.

12. Emballage global selon l'une quelconque des revendications 1-11, **caractérisé en ce que** l'emballage global présente la forme d'un sachet, de préférence d'un sachet tenant debout, ou est sous forme d'emballage d'enveloppement.

13. Emballage global selon l'une quelconque des revendications 1-12, **caractérisé en ce que** l'emballage global présente, de manière adjacente à l'agencement de fermeture à ouvrir, de préférence au joint de scellement, comme auxiliaire d'ouverture, une entaille ou une perforation présentant une orientation longitudinale parallèle à l'étirage longitudinal de la feuille multicouche.

14. Emballage global selon l'une quelconque des revendications 1-13, **caractérisé en ce qu'**une denrée alimentaire, de préférence un aliment pour animaux ou un aliment, est emballée dans l'emballage, qui est le cas échéant stérilisé.

15. Utilisation de l'emballage global selon l'une quelconque des revendications 1-13 pour l'emballage d'aliments pour animaux ou d'aliments.
